# EUROPÄISCHE PATENTANMELDUNG

(11) **EP 1 243 862 A2**
(43) Veröffentlichungstag der Anmeldung: **25.09.2002**
(21) Anmeldenummer: 02006462.2
(22) Anmeldetag: 22.03.2002
(51) Int. Cl.: F24D 3/16

(54) **Strahlflächenaufbau**

(30) Priorität: 23.03.2001 DE 20105169 U
(71) Anmelder: Menge, Klaus, 64823 Gross-Umstadt (DE)
(72) Erfinder: Menge, Klaus, 64823 Gross-Umstadt (DE)
(74) Vertreter: KEIL & SCHAAFHAUSEN

(57) **Zusammenfassung**

Die Erfindung bezieht sich auf einen Strahlflächenaufbau, insbesondere Deckenstrahlflächenaufbau, mit einer oder mehreren Strahlplatten (1a, 1b, 1c) aus Blech und mit im Abstand voneinander angeordneten Rohren (6, 7) eines mit einem Heiz- oder Kühlmedium zu beaufschlagenden Rohrregisters zur Strahlungswärme- und/oder Strahlungskälteübertragung, wobei ein Randbereich (12, 16) wenigstens einer Strahlplatte (1a) des Deckenstrahlflächenaufbaus mit wenigstens einer Abschirmung (13) thermisch von einem Innenbereich (14) des Deckenstrahlflächenaufbaus entkoppelt ist.

## Beschreibung

Die Erfindung betrifft einen Strahlflächenaufbau, insbesondere Deckenstrahlflächenaufbau, mit einer oder mehreren Strahlplatten aus Blech und mit im Abstand voneinander angeordneten Rohren eines mit einem Heiz- oder Kühlmedium zu beaufschlagenden Rohrregisters zur Strahlungswärme- und/oder Strahlungskälteübertragung.

Ein derartiger Strahlflächenaufbau ist aus der DE 100 24 507 A1 bekannt und kann zum Kühlen und/oder zum Heizen von Räumen oder Hallen eingesetzt werden.

Im Rahmen der Wärme- oder Kälteübertragung eines Strahlflächenaufbaus wird ein hoher Strahlungsanteil angestrebt. Konvektive Anteile führen zu thermisch bedingten Luftströmungen und Luftumwälzungen, deren Luftzug als unkomfortabel empfunden wird. Darüber hinaus trägt der konvektive Leistungsanteil von Deckenstrahlflächen nicht zur Erwärmung der darunter liegenden Arbeits- und Aufenthaltsbereiche bei und ist somit als Verlust zu betrachten. Es sind sogenannte Strahlkanten bekannt geworden, welche nachträglich gesondert an Längsseiten von Strahlplatten befestigt werden, und mit einem leitblechartig in einem bestimmten Winkel abgekröpften Bereich in den Innenraum des zu erwärmenden oder abzukühlenden Raumes hineinragen, was eine Steigerung des Strahlungsanteils bewirken soll. Jede Strahlkante verursachen zusätzlichen Bau- und Montageaufwand und ist deshalb kostenintensiv. Eine konvektionsfreie Warmluftansammlung erlauben Strahlkanten nicht.

Der Erfindung liegt die Aufgabe zugrunde, einen kostengünstigen Strahlflächenaufbau mit erhöhtem Strahlungsanteil bereitzustellen.

Diese Aufgabe wird dadurch gelöst, dass ein Randbereich des Strahlflächenaufbaus mit wenigstens einer Abschirmung thermisch von einem Innenbereich des Strahlflächenaufbaus entkoppelt ist. Die Erfindung beruht auf der Erkenntnis, dass sich in Folge von randseitig an den Strahlflächenaufbau angrenzenden, erwärmten oder abgekühlten Flächen (bspw. eine erwärmte oder abgekühlte Wand) eine Verstärkung des konvektiven Anteiles einstellt. Hier greift die Erfindung ein, indem ein Randbereich einer Strahlplatte mit wenigstens einer Abschirmung von einem Innenbereich des Strahlflächenaufbaus thermisch entkoppelt ist, so dass eine fokussierte Einstrahlung über den Innenbereich erfolgt.

In vorteilhafter Weiterbildung der Erfindung ist vorgesehen, dass der Randbereich der Strahlplatten mit einer Randaufkantung versehen ist, und zur thermischen Abschirmung unter Zwischenlage einer thermischen Isolierschicht an einem der Rohre anliegt. Die thermische Isolierschicht verhindert folglich eine Wärmeableitung in einen wandseitigen Randbereich einer Strahlplatte.

Ein besonders montagefreundlicher Strahlflächenaufbau ergibt sich dadurch, dass die Strahlplatten in einem Randbereich mehrteilig ausgebildet sind, und dass zwischen benachbarten Strahlplattenteilen ein Kupplungselement vorgesehen ist.

In weiterer Ausgestaltung der Erfindung ist vorgesehen, dass das Kupplungselement Nuten zur Aufnahme benachbarter Strahlplattenteile aufweist. Das Kupplungselement besteht vorzugsweise aus Isolierwerkstoff und wird zwischen die benachbarten Strahlplattenteile eingefügt, beispielsweise eingesteckt.

Bei einer abgewandelten Ausführungsform der Erfindung ist das Kupplungselement in einem Überlappungsbereich zwischen benachbarten, aneinander befestigten Strahlplattenteilen vorgesehen. Dabei ist das Kupplungselement nach Art einer Flachdichtung zwischen den Strahlplattenteilen eingefügt.

Bei einer Ausführungsform der Erfindung weist der Strahlflächenaufbau eine raumseitig konkave Krümmung auf und innerhalb der Krümmung ist wenigstens ein Abstrahlblech für die Abschirmung vorgesehen. Die Abstrahlbleche können paarweise an einander gegenüberliegenden Stirnseiten der gekrümmten Strahlfläche vorgesehen werden, so dass innerhalb einer wannenförmigen Vertiefung gewissermaßen eine konvektionsfreie Warmluftansammlung für fokussierte Wärmeeinstrahlung entsteht.

Im Folgenden werden drei Ausführungsbeispiele der Erfindung unter Bezugnahme auf die Zeichnung näher erläutert.

Es zeigen jeweils schematisch:
- Fig. 1: eine Querschnittsansicht eines erfindungsgemäßen Strahlflächenaufbaus,
- Fig. 2: eine vergrößerte Darstellung einer Einzelheit II aus Fig. 1,
- Fig. 3: eine Querschnittsansicht einer zweiten Ausführungsform der Erfindung,

- Fig. 4: eine Querschnittsansicht einer dritten Ausführungsform der Erfindung, und
- Fig. 5: eine verkleinerte sowie perspektivische Ansicht der Ausführungsform gemäß Fig. 4.

Ein in der Zeichnung ausschnittartig verdeutlichter Strahlflächenaufbau verfügt über mehrere Strahlplatten 1a, 1b, 1c mit aufgekanteten Rändern 2, 3, 4, 5 welche jeweils im Bereich von Rohren 6, 7 vorgesehen sind, und das jeweilige Rohr 6, 7 zumindest teilweise für den Wärme- oder Kälteübergang umgreifen. Die Rohre 6, 7 bilden zusammen ein von einem Heiz- oder Kühlmittel durchflutetes Rohrregister, in dem das Heiz- oder Kühlmittel zirkuliert. Der Strahlflächenaufbau wird vorzugsweise an einer Decke angeordnet. Generell ist es auch möglich, den Aufbau an einer Wand W vorzusehen, wenn es die Umstände erfordern.

Auf einer, einem Abstrahlbereich 8 abgewandten, Seite der Strahlplatten 1a, 1b, 1c, sind an den Rohren 6, 7 Haltemittel 9 in Gestalt von Gewindebolzen befestigt, auf die ein mit jeweils einer entsprechenden Bohrung versehenes, als U-förmige Schiene ausgebildetes, Befestigungselement 10 aufgefädelt ist. Eine Mutter 11 ist auf den Gewindebolzen aufschraubbar und dient der Anpressung jedes Befestigungselementes 10 zusammen mit den Rändern 2, 3, 4, 5 in Richtung Rohrwandung im Sinne einer guten Wärme- oder Kälteübertragung auf die Strahlplatte 1a, 1b, 1c.

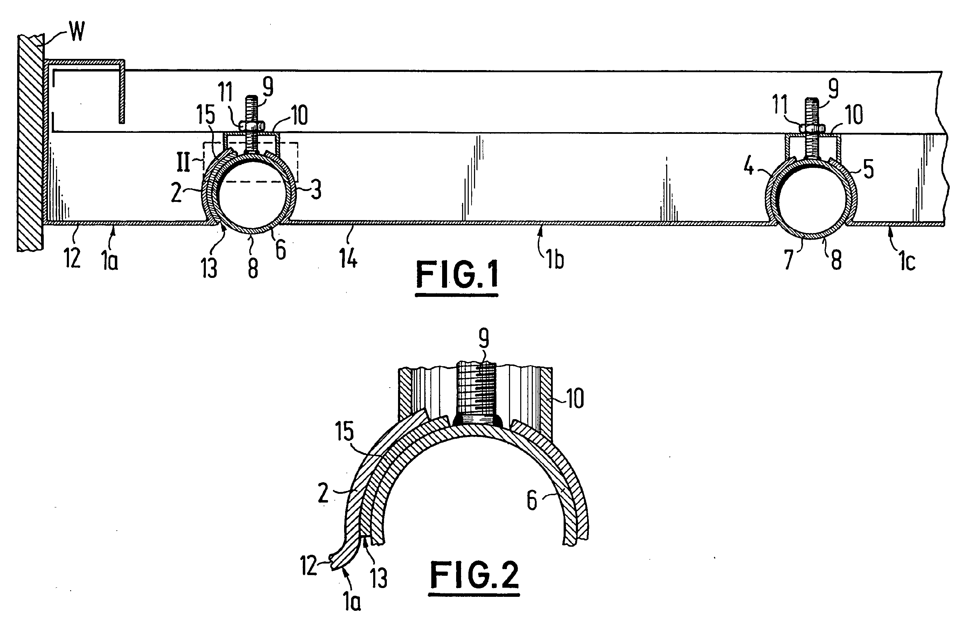

Wie insbesondere aus Fig. 1 hervorgeht, grenzt an eine Wand W eine Strahlplatte 1a, welche als Seitenplatte ausgebildet ist, und einen Randbereich 12 aufweist, welcher mit einer thermischen Abschirmung 13 von einem Innenbereich 14 mit einer angrenzenden Strahlplatte 1b des Deckenstrahlflächenaufbaus entkoppelt ist. Wie besonders deutlich aus Fig. 2 hervorgeht, ist die Abschirmung 13 als Zwischenlage 15 aus einem thermischen Isolierwerkstoff ausgebildet und zwischen dem abgekanteten Rand 2 sowie dem Rohr 6 eingefügt. Die entsprechende thermische Isolierung verhindert eine Wärme- oder Kälteableitung in den Randbereich 12, und die Wand W. Folglich wird die Aufheizung oder die Abkühlung der Wand W, und der entsprechende konvektive Effekt an der aufgeheizten oder abgekühlten Wand W verhindert.

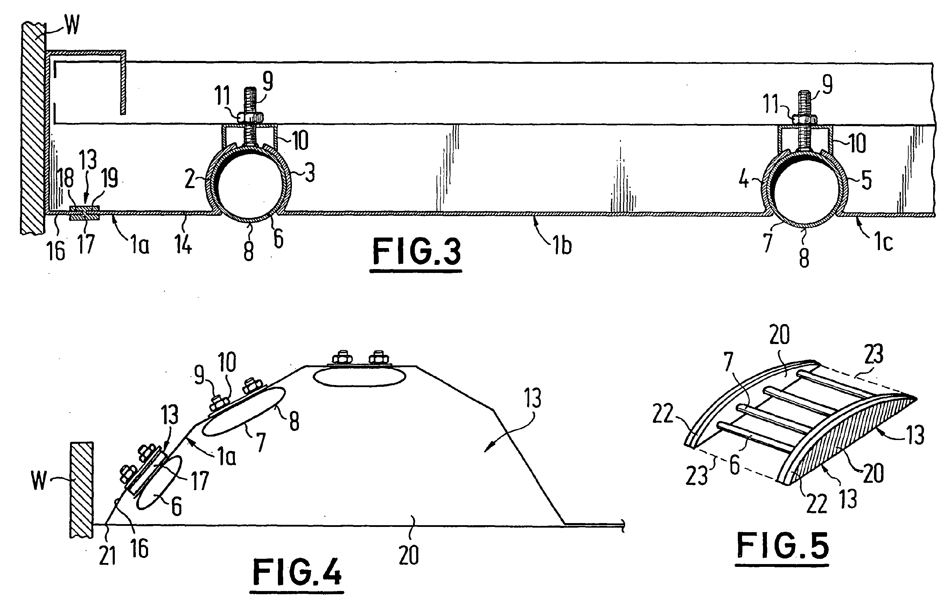

Mit Fig. 1 und 2 übereinstimmende Merkmale sind in den Figuren 3, 4 und 5 mit gleichen Bezugsziffern versehen.

Gemäß Fig. 3 ist die randseitige Strahlplatte 1a mehrteilig ausgebildet und verfügt über einen separaten Randbereich 16 (Randblech), welcher über ein thermisch wirksames Kupplungselement 17 mit dem Rest der wandseitigen Strahlplatte 1a verbunden ist. Das Kupplungselement 17 ist mit einander gegenüberliegenden Nuten 18, 19 zur Aufnahme der Ränder der benachbarten Plattenteile 1a, 16 versehen. Das Kupplungselement 17 besteht aus einem Isolierwerkstoff und verhindert eine Wärme- oder Kälteableitung von einer aufgeheizten oder abgekühlten Strahlplatte 1a in Richtung Randbereich 16 und Wand W. Mit anderen Worten wird der Randbereich 16 weder für eine Strahlungsübertragung, noch für eine konvektive Übertragung herangezogen.

Den Fig. 4 und 5 ist ein Strahlflächenaufbau mit mehreren Rohren 6, 7 zu entnehmen. Die Rohre 6, 7 sind an einer Strahlplatte 1a befestigt, welche abgekröpfte Bereiche aufweist, so dass sich in einer Ebene eine - ausgehend von einem zu beheizenden oder abzukühlenden Raum - im Wesentlichen konkave Krümmung ergibt. In Längsrichtung 23 ist die Strahlplatte 1a prismatisch ausgebildet. Die zylinderwandförmige Krümmung geht besonders deutlich aus Fig. 5 hervor und bewirkt eine Fokussierung der Wärmestrahlung in Richtung Raum. Jeweils an Stirnseiten 22 ist innerhalb der Krümmung ein Abstrahlblech 20 zur thermischen Abschirmung vorgesehen, welches mit einer raumseitigen Unterseite 21 der Strahlplatte 1a abschließt. Das Abstrahlblech 20 ragt nicht in seite 21 der Strahlplatte 1a abschließt. Das Abstrahlblech 20 ragt nicht in das Innere des zu beheizenden oder zu kühlenden Raumes, so dass keine Raumverkleinerung eintritt. Auch die optische Wirkung des Strahlflächenaufbaus wird durch das Abstrahlblech 20 nicht beeinträchtigt. Die paarweise angeordneten Abstrahlbleche 20 können jeweils in einem wandseitigen Randbereich von einander gegenüberliegenden Stirnseiten 22 der gekrümmten Strahlfläche vorgesehen werden, um einen konvektiven Effekt an einer Wand W zu vermeiden und um eine Ansammlung von Warmluft in der wannenartigen Vertiefung zu erlauben.

Zusätzlich zu dem Abstrahlblech 20 ist gemäß Fig. 4 ein thermisch isolierendes Kupplungselement 17 vorgesehen, welches zwischen dem Randbereich 16 (Randblech) und der Strahlplatte 1a in einem Überlappungsbereich dichtungsartig eingefügt ist. Wie zu ersehen ist, liegt zwischen dem Randbereich 16 und der Strahlplatte 1a eine schematisch verdeutlichte Verschraubung oder Vernietung vor.

Es versteht sich, dass die beschriebenen Ausführungsformen der Erfindung jeweils selbständig oder in beliebiger Kombination vorgesehen werden können, ohne die Erfindung zu verlassen.

### Bezugszeichenliste

- 1a, 1b, 1c: Strahlplatte
- 2, 3, 4, 5: Rand
- 6: Rohr
- 7: Rohr
- 8: Abstrahlbereich
- 9: Haltemittel
- 10: Befestigungselement
- 11: Mutter
- 12: Randbereich
- 13: Abschirmung
- 14: Innenbereich
- 15: Zwischenlage
- 16: Randbereich
- 17: Kupplungselement
- 18: Nut
- 19: Nut
- 20: Abstrahlblech
- 21: Unterseite
- 22: Stirnseite
- 23: Längsrichtung
- W: Wand

## Patentansprüche

1. Strahlflächenaufbau, insbesondere Deckenstrahlflächenaufbau, mit einer oder mehreren Strahlplatten (1a, 1b, 1c) aus Blech und mit im Abstand voneinander angeordneten Rohren (6, 7) eines mit einem Heiz- oder Kühlmedium zu beaufschlagenden Rohrregisters zur Strahlungswärme- und/oder Strahlungskälteübertragung, **dadurch gekennzeichnet, dass** ein Randbereich (12, 16) wenigstens einer Strahlplatte (1a) des Deckenstrahlflächenaufbaus mit wenigstens einer Abschirmung (13) thermisch von einem Innenbereich (14) des Deckenstrahlflächenaufbaus entkoppelt ist.

2. Strahlflächenaufbau nach Anspruch 1, **dadurch gekennzeichnet, dass** der Randbereich (12) mit einer Randaufkantung (2) versehen ist, und zur thermischen Abschirmung unter Zwischenlage (15) einer thermischen Isolierschicht an einem der Rohre (6, 7) anliegt.

3. Strahlflächenaufbau nach einem der vorhergehenden Ansprüche, **dadurch gekennzeichnet, dass** die Strahlplatten (1a, 1b, 1c) zumindest in einem Randbereich (12, 16) des Strahlflächenaufbaus mehrteilig ausgebildet sind, und dass zwischen benachbarten Strahlplattenteilen ein thermisches Kupplungselement (17) vorgesehen ist.

4. Strahlflächenaufbau nach Anspruch 3, **dadurch gekennzeichnet, dass** das Kupplungselement (17) mit Nuten (18, 19) zur Aufnahme der benachbarten Strahlplattenteile versehen ist.

5. Strahlflächenaufbau nach Anspruch 3 oder 4, **dadurch gekennzeichnet, dass** das Kupplungselement (17) aus Isolierwerkstoff besteht.

6. Strahlflächenaufbau nach Anspruch 3, 4 oder 5, **dadurch gekennzeichnet, dass** das Kupplungselement (17) in einem Überlappungsbereich zwischen aneinander befestigten Strahlplattenteilen vorgesehen ist.

7. Strahlflächenaufbau nach einem der vorhergehenden Ansprüche, **dadurch gekennzeichnet, dass** eine Krümmung vorgesehen ist, und dass wenigstens ein Abstrahlblech (20) für die Abschirmung innerhalb der Krümmung vorgesehen ist.

8. Strahlflächenaufbau nach Anspruch 7, **dadurch gekennzeichnet, dass** die Krümmung bezogen auf den zu beheizenden oder zu kühlenden Raum konkav ist.

9. Strahlflächenaufbau nach Anspruch 7 oder 8, **dadurch gekennzeichnet, dass** Abstrahlbleche (20) an einander gegenüberliegenden Stirnseiten (22) der gekrümmten Strahlfläche vorgesehen sind.
